(19) Europäisches Patentamt
European Patent Office
Office européen des brevets

(11) **EP 4 778 773 A1**

(12) **EUROPEAN PATENT APPLICATION**
published in accordance with Art. 153(4) EPC

(43) Date of publication:
**22.07.2026  Bulletin 2026/30**

(21) Application number: **24865767.8**

(22) Date of filing: **05.09.2024**

(51) International Patent Classification (IPC):
**B60L 53/30** (2019.01)       **B60L 53/18** (2019.01)
**B60L 53/12** (2019.01)       **H02G 11/02** (2006.01)
**H02G 11/00** (2006.01)

(52) Cooperative Patent Classification (CPC):
**B60L 53/12; B60L 53/18; B60L 53/30; H02G 11/00;
H02G 11/02;** Y02T 10/70; Y02T 10/7072;
Y02T 90/14

(86) International application number:
**PCT/KR2024/013445**

(87) International publication number:
**WO 2025/058326 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023  KR 20230120858
30.08.2024  KR 20240117828**

(71) Applicant: **LS Cable & System Ltd.
Anyang-si, Gyeonggi-do 14119 (KR)**

(72) Inventors:
• KO, Hyun Jin
  Seoul 07703 (KR)
• SONG, Chi Yoon
  Suwon-si Gyeonggi-do 16369 (KR)
• YONG, Dae Ung
  Anyang-si Gyeonggi-do 14055 (KR)
• LEE, Jin Hee
  Gimpo-si Gyeonggi-do 10113 (KR)
• BAN, Jae Bong
  Seoul 08608 (KR)

(74) Representative: **K&L Gates LLP
Karolinen Karree
Karlstraße 12
80333 München (DE)**

(54) **BUS DUCT SYSTEM FOR CHARGING ELECTRIC VEHICLE AND ELECTRIC VEHICLE CHARGING SYSTEM INCLUDING SAME**

(57)    Provided is a bus duct system for charging electric vehicles and an electric vehicle charging system including the same. More particularly, the present invention relates to a bus duct system for charging electric vehicles capable of simultaneously charging a plurality of electric vehicles parked in a distributed manner across a plurality of areas and minimizing the space required to construct charging facilities and an electric vehicle charging system including the same.

[FIG. 9]

**Description**

[Technical Field]

The present invention relates to a bus duct system for charging electric vehicles and an electric vehicle charging system including the same. More particularly, the present invention relates to a bus duct system for charging electric vehicles capable of simultaneously charging a plurality of electric vehicles parked in a distributed manner across a plurality of areas and minimizing the space required to construct charging facilities and an electric vehicle charging system including the same.

[Background Art]

Recently, the market share of electric vehicles has been rapidly increasing worldwide. Electric vehicles are vehicles that operate by driving a motor using electricity supplied by a battery, and the battery must be periodically charged using an electric vehicle charger.

Electric vehicle chargers for charging electric vehicles are distributed across a plurality of areas, such as vehicle parking lots. With increase in the adoption rate of electric vehicles, the deployment of numerous electric vehicle chargers is required, and there is a demand for charging facilities capable of simultaneously charging a plurality of electric vehicles in a short time.

However, establishing a power supply network to simultaneously operate a plurality of slow or fast electric vehicle chargers is necessary, and securing the space for installing numerous electric vehicle chargers is particularly problematic.

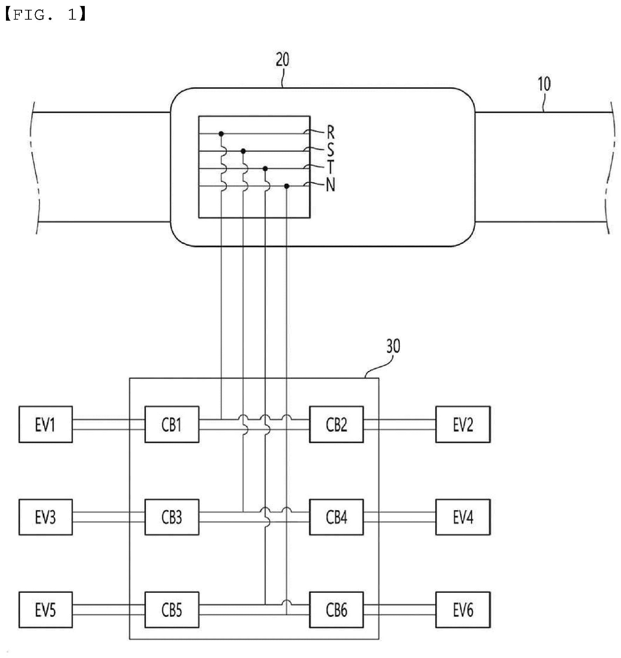

FIG. 1 schematically shows a power supply route of a bus duct-based electric vehicle charging system.

As shown in FIG. 1, the bus duct-based electric vehicle charging system includes a bus duct 10 configured to supply power, a branch box 20 configured to branch the power from the bus duct 10, and a distribution panel 30 configured to supply the branched power from the branch box 20 to an electric vehicle charger.

For example, the bus duct 10 may include four busbars as a current flow path, such as an R-phase busbar, an S-phase busbar, and a T-phase busbar, which has different phases, and an N-phase busbar 114, which is a neutral line, and the branch box 20 is provided with an electrical connection member, such as a brush, electrically connected to each busbar to transmit the power supplied from the phase-specific busbar to the distribution panel 30, and the distribution panel 30 supplies the supplied power to the electric vehicle (EV) charger.

Specifically, the branch box 20 receives three-phase power from all of the R-phase, S-phase, and T-phase busbars of the bus duct 10 and transmits the received power to the distribution panel 30. Any one of an R-phase and N-phase busbar pair, an S-phase and N-phase busbar pair, and a T-phase and N-phase busbar pair may be connected to each of a plurality of circuit breakers (CB) provided in the distribution panel 30, and power is supplied to the electric vehicle charger through each circuit breaker (CB).

The bus duct-based electric vehicle charging system requires a large space to construct the charging facilities. In addition, since power is supplied through the separately installed distribution panel 30, the power supply route becomes complex, introducing additional errors in the power supply.

Therefore, there is a need for a bus duct system for charging electric vehicles capable of simultaneously charging a plurality of electric vehicles and minimizing the space required to construct the charging facilities and an electric vehicle charging system including the same.

[Disclosure]

[Technical Problem]

It is an object of the present invention to provide a bus duct system for charging electric vehicles capable of simultaneously charging a plurality of electric vehicles parked in a distributed manner across a plurality of areas, minimizing the space required to construct charging facilities, providing a compact overall system, and achieving efficient power supply, and an electric vehicle charging system including the same.

[Technical Solution]

According to an aspect of the present invention,
there is a bus duct system for charging electric vehicles, the bus duct system comprising: a bus duct line comprising a plurality of bus ducts and a bus duct connection unit configured to electrically connect the bus ducts to each other, the bus duct line constituting a power supply network; and a branching device configured to branch power supplied through the bus ducts to supply the branched power to an electric vehicle charger, wherein each of the bus ducts comprises a plurality of busbars and an enclosure configured to receive the plurality of busbars, the plurality of busbars comprises an R-phase busbar, an S-phase busbar, a T-phase busbar, and at least one N-phase busbar, the branching device comprises a first electrical connection member connected to any one of the R-phase, S-phase, and T-phase busbars and a second electrical connection member connected to the N-phase busbar as a plurality of electrical connection members electrically connected one-to-one to the plurality of busbars, and the plurality of electrical connection members is electrically connected only to any one of the R-phase, S-phase, and T-phase busbars and to the N-phase busbar.

According to an another aspect of the present invention, there is the bus duct system, wherein the branching device is provided in a quantity of N along the entire bus duct line, among the N branching devices, the number of branching devices comprising the first electrical connection member connected to the R-phase busbar is X, the number of branching devices comprising the first electrical connection member connected to the S-phase busbar is Y, and the number of branching devices comprising the first electrical connection member connected to the T-phase busbar is Z, and Equation 1 below is satisfied.

[Equation 1]

$$3(C_{max}-C_{min})/N \leq 0.25$$

In Equation 1,
$C_{max}$ is a largest value among X, Y, and Z, and $C_{min}$ is a smallest value among X, Y, and Z.

According to an another aspect of the present invention, there is the bus duct system, wherein each of the plurality of electrical connection members is electrically connected to a corresponding one of the plurality of busbars via a connection terminal coupled to each of the plurality of busbars.

According to an another aspect of the present invention, there is an electric vehicle charging system comprising: the bus duct system; and an electric vehicle charger configured to charge an electric vehicle using power supplied from the branching device.

According to an another aspect of the present invention, there is the electric vehicle charging system, wherein the electric vehicle charger comprises: a charging unit configured to provide charging power to an electric vehicle; an electric vehicle connection unit configured to connect the charging unit and the electric vehicle to each other via a wired or wireless connection; and a controller configured to control the charging unit.

According to an another aspect of the present invention, there is the electric vehicle charging system, wherein the charging unit is provided in the branching device.

According to an another aspect of the present invention, there is the electric vehicle charging system, wherein the electric vehicle connection unit comprises a charging cable or a wireless charging coil.

According to an another aspect of the present invention, there is the electric vehicle charging system, wherein the electric vehicle connection unit comprises a charging cable, and the electric vehicle charging system further comprises a cable reel structure capable of extending or retracting the charging cable to adjust a length of the charging cable.

According to an another aspect of the present invention, there is the electric vehicle charging system, wherein the cable reel structure comprises a single reel structure with one pulley for winding the charging cable or a double reel structure with two pulleys for winding the charging cable.

[Advantageous Effects]

In an electric vehicle charging system according to the present invention, high-capacity power transmission is possible so as to simultaneously charge a plurality of electric vehicles through a power supply network using a bus duct, and a separate distribution panel is not required since power is directly supplied to an electric vehicle charger in a single-phase manner from a branching device fastened to the bus duct, whereby the present invention has the effect of minimizing the space required to construct charging facilities, providing a compact overall system, and achieving efficient power supply.

[Description of Drawings]

FIG. 1 schematically shows a power supply route of a bus duct-based electric vehicle charging system.
FIG. 2 is a perspective view of an embodiment of a bus duct line and a branching device of a bus duct system for charging electric vehicles according to the present invention.
FIG. 3 schematically shows the assembled state of the bus duct system for charging electric vehicles shown in FIG. 2.

FIG. 4 is a bottom perspective view of the branching device in the bus duct system for charging electric vehicles shown in FIG. 2.

FIG. 5 is an enlarged view showing that a branching connection unit provided on a lower surface of a branching device commonly used in a bus duct is connected to a busbar.

FIG. 6 is an enlarged view showing that a branching connection unit provided on a lower surface of a branching device according to an embodiment of the present invention is connected to a busbar.

FIG. 7 is an enlarged view showing that a branching connection unit provided on a lower surface of a branching device according to another embodiment of the present invention is connected to a busbar.

FIG. 8 schematically shows the state of an electrical connection member disposed under a circuit breaker with a cover of a housing opened and the circuit breaker removed in each branching device shown in FIG. 2.

FIG. 9 schematically shows a power supply route in an electric vehicle charging system including the bus duct system for charging electric vehicles shown in FIG. 2.

FIG. 10 schematically shows the electric vehicle charging system to which a cable reel structure according to the present invention is added.

FIG. 11 is an enlarged view showing the configuration of a single reel structure in the cable reel structure shown in FIG. 10.

FIG. 12 is an internal perspective view of a slip ring in FIG. 11.

FIG. 13 schematically shows a speed controller applicable to the single reel structure shown in FIG. 11.

FIG. 14 schematically shows a magnetic damper applicable to the single reel structure shown in FIG. 11.

FIG. 15 schematically shows the layered structure of a cable wound on a pulley of the single reel structure shown in FIG. 11.

FIG. 16 schematically shows the configuration of a double reel structure in the cable reel structure shown in FIG. 10.

FIG. 17 is an enlarged view showing the double reel structure shown in FIG. 16.

FIG. 18 schematically shows the section of a pulley on which a cable is wound in the double reel structure shown in FIG. 17.

FIG. 19 is an enlarged view showing a ratchet stopper in FIG. 17.

FIG. 20 is an exploded perspective view of a ball bearing stopper applicable to the cable reel structure shown in FIG. 10.

FIG. 21 schematically shows an operation of the ball bearing stopper shown in FIG. 20.

FIG. 22 schematically shows another operation of the ball bearing stopper shown in FIG. 20.

FIG. 23 schematically shows the operation of a sub-ball bearing in the ball bearing stopper shown in FIG. 20.

[Best Mode]

Hereinafter, preferred embodiments of the present invention will be described in detail with reference to the accompanying drawings. However, the present invention is not limited to the embodiments described herein, and may be embodied in various different forms. Rather, these embodiments are provided such that the present invention will be thorough and complete, and will fully convey the scope of the present invention to those skilled in the art. The same reference numbers denote the same elements throughout the specification.

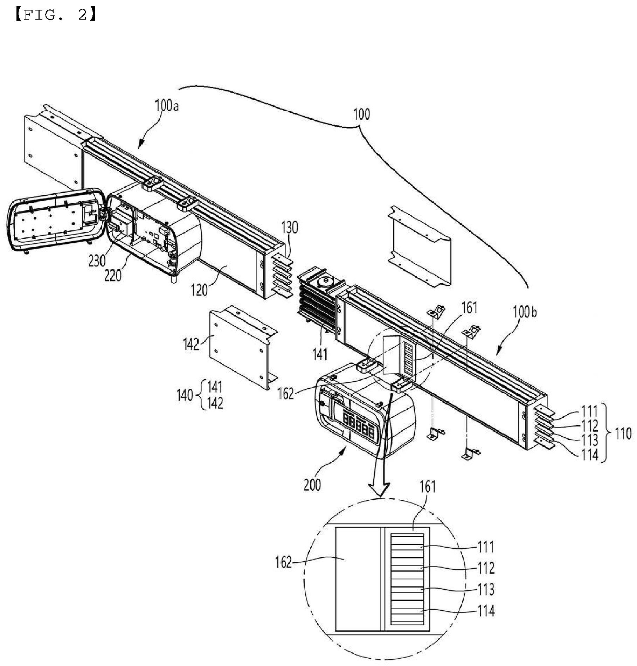

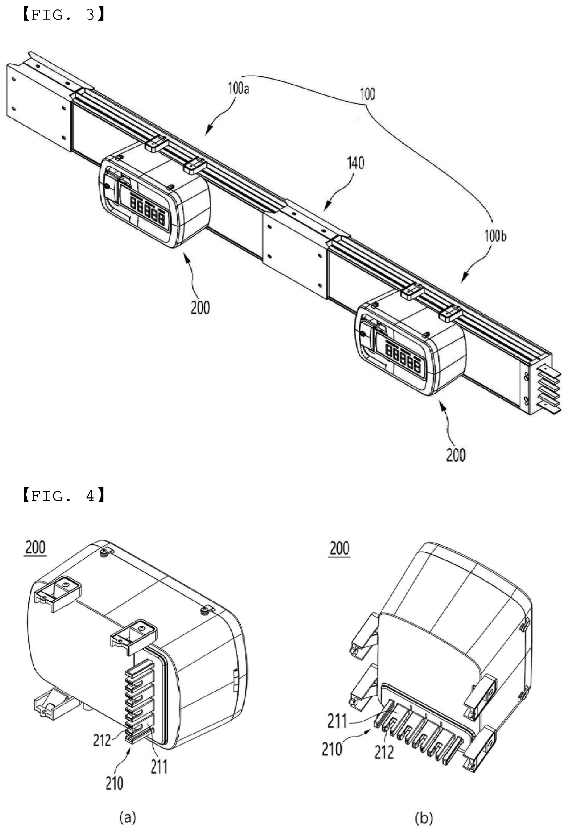

FIG. 2 is a perspective view of an embodiment of a bus duct system for charging electric vehicles according to the present invention, and FIG. 3 schematically shows the assembled state of the bus duct system for charging electric vehicles shown in FIG. 2.

As shown in FIGs. 2 and 3, the bus duct system for charging electric vehicles according to the present invention may include a bus duct line 100 configured such that a plurality of bus ducts 100a and 100b is connected to each other via a bus duct connection unit 140 to constitute a power supply network and a plurality of branching devices 200 configured to branch power supplied through one of the plurality of bus ducts 100a and 100b and to supply the same to an electric vehicle charger, wherein the electric vehicle charger may be configured such that at least some components of the electric vehicle charger are integrally provided in a housing of the branching device 200 or may be provided outside separately from the branching device 200.

Here, the bus ducts 100a and 100b may be configured such that a busbar corresponding to a conductor is not exposed to the outside but is received in a cover having a duct-shaped hollow portion and is constructed along a line, thereby preventing damage or safety incidents caused by a cable coming into contact with people or objects, minimizing adverse effects on appearance, minimizing space required to construct the power supply network, and supplying sufficient power to simultaneously charge a plurality of electric vehicles.

Specifically, each of the plurality of bus ducts 100a and 100b may include a plurality of busbars 110 as a current flow path, such as an R-phase busbar 111, an S-phase busbar 112, and a T-phase busbar 113, which are configured to supply power of different phases, and at least one N-phase busbar 114, which is a neutral line, and an enclosure 120 configured to receive the busbars 110.

Hereinafter, the embodiment of the present invention will be shown and described as having one N-phase busbar 114, which is a neutral line, but two or more N-phase busbars 114 may also be provided.

In addition, a pair of ground wires 130 may be further provided in the enclosure.

Here, the enclosure 120 may be provided with a busbar connection hole 161 formed in the part thereof to which the branching device 200 is fastened to expose the busbar 110 to be electrically connected to the branching device 200 to the outside and a cover 162 configured to open and close the busbar connection hole 161.

In addition, the bus duct connection unit 140 configured to connect the plurality of bus ducts 100a and 100b to each other may include a connection kit 141 configured to connect the plurality of busbars 110 exposed at one end of one bus duct 100a and the plurality of busbars 110 exposed at an opposing end of the other bus duct 100b to each other for each phase and a cover 142 configured to protect the exposed busbars and the connection kit 141. The connection kit 141 is known from many prior art documents, including applicant's prior patents, and a detailed description thereof will be omitted.

In addition, the branching device 200 may include a housing 220 provided with an openable cover and a circuit breaker 230 configured to prevent overcurrent for safety, wherein some components of the electric vehicle charger may be integrally provided in the housing 220.

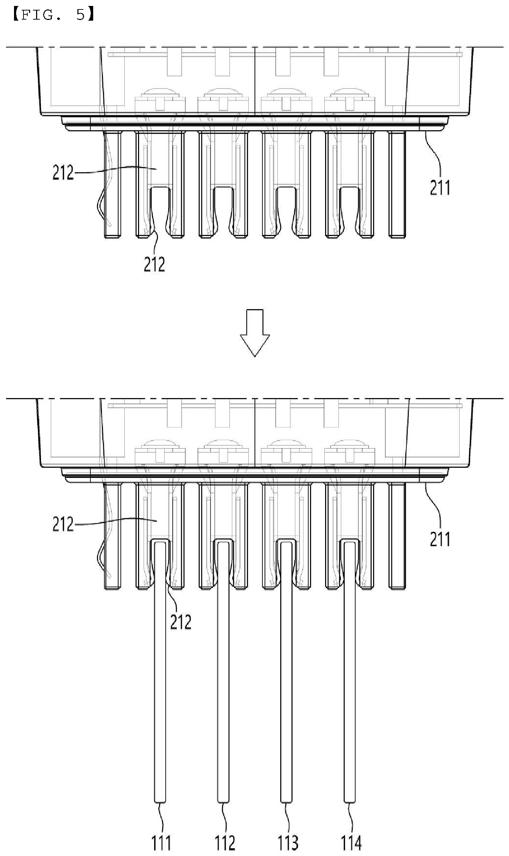

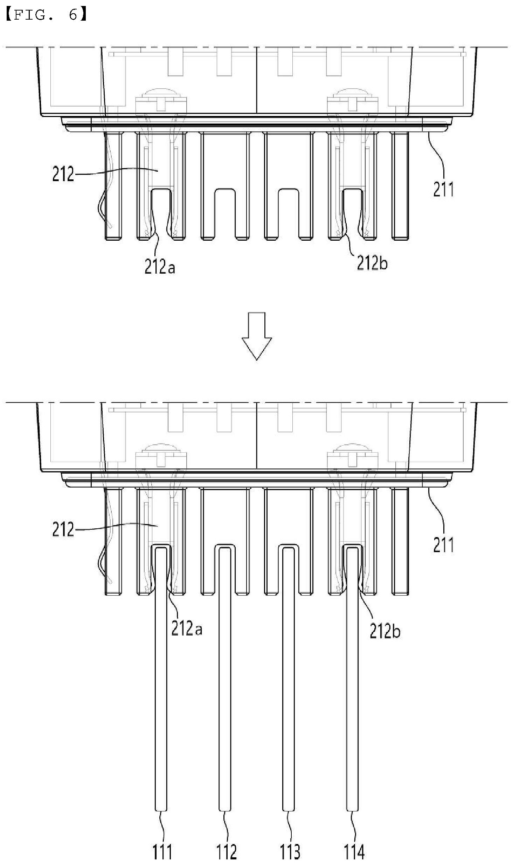

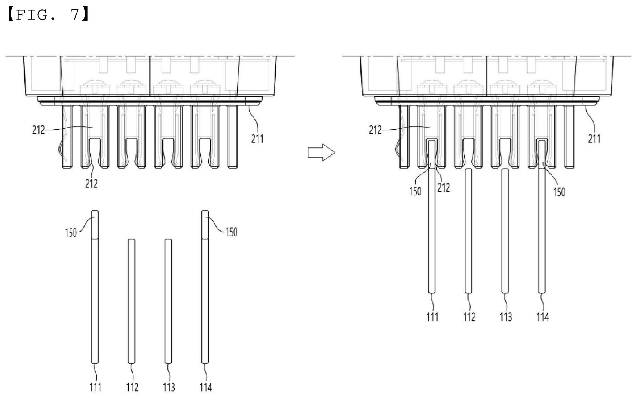

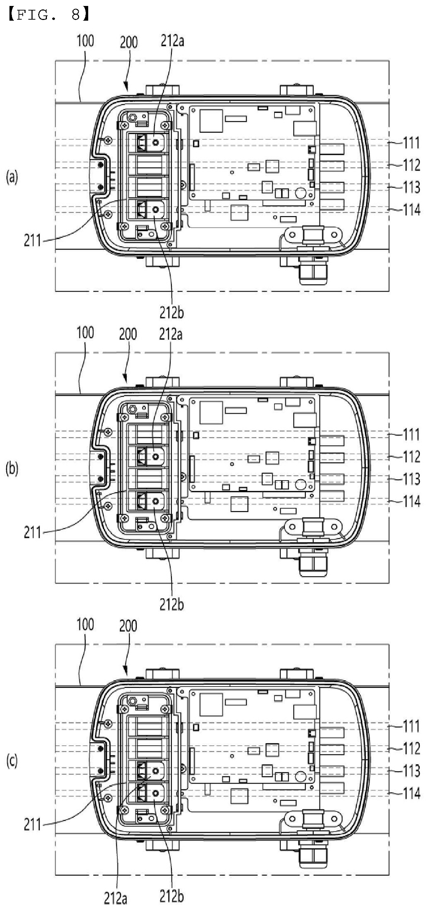

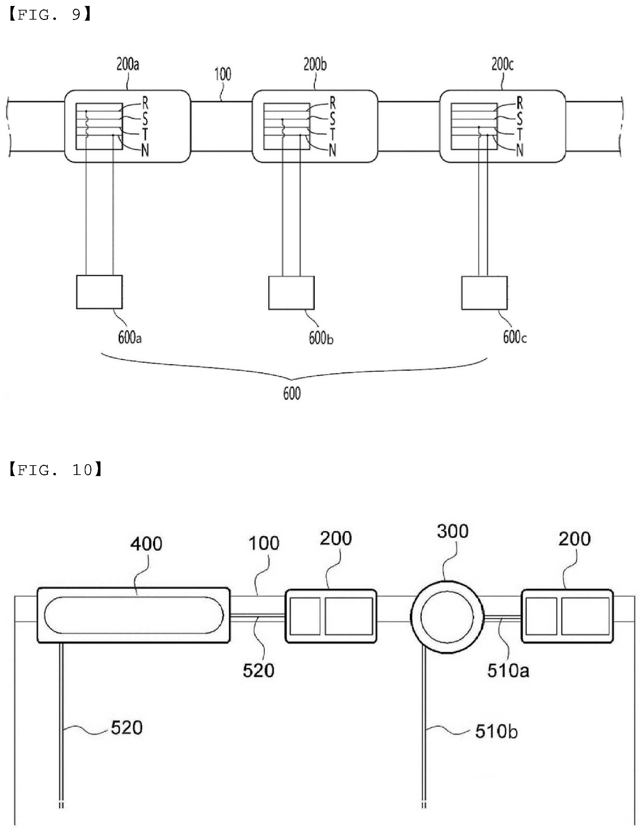

FIG. 4 is a bottom perspective view of the branching device in the bus duct system for charging electric vehicles shown in FIG. 2, FIG. 5 is an enlarged view showing that a branching connection unit provided on a lower surface of a branching device commonly used in a bus duct is connected to a busbar, FIGs. 6 and 7 are enlarged views showing that a branching connection unit provided on a lower surface of the branching device according to the embodiment of the present invention is connected to a busbar, FIG. 8 schematically shows the state of an electrical connection member disposed under the circuit breaker with the cover of the housing opened and the circuit breaker removed in each branching device shown in FIG. 2, and FIG. 9 schematically shows a power supply route in an electric vehicle charging system including the bus duct system for charging electric vehicles shown in FIG. 2.

Specifically, the branching device 200 may include a branching connection unit 210 provided on a lower surface thereof to electrically connect the plurality of busbars 110 exposed to the outside through the busbar connection hole 161 at the enclosure 120 of each of the bus ducts 100a and 100b to which the branching device 200 is fastened and the circuit breaker 230 to each other.

Here, the branching connection unit 210 may include a plurality of electrical connection members 212 having, for example, a clamp-like shape to grip both side surfaces of each of the plurality of busbars 110 for connection to each busbar and a branching connection unit housing 211 into which the plurality of electrical connection members 212 is removably inserted so as to be protected in a state of being insulated from each other.

Each of the plurality of electrical connection members 212 may be directly connected to a corresponding one of the plurality of busbars 110, or may be electrically connected to a corresponding one of the plurality of busbars via a connection terminal coupled to each of the plurality of busbars 110.

As shown in FIG. 5, in the branching connection unit 210 provided on the lower surface of the branching device 200, commonly used in the bus duct line 100, each of the plurality of electrical connection members 212 is electrically connected to a corresponding one of the R-phase, S-phase, T-phase, and N-phase busbars 111, 112, 113, and 114, whereby power is branched into three phases and is supplied to the electric vehicle charger via a separate distribution panel. However, in the embodiment of the bus duct system for charging electric vehicles according to the present invention, as shown in FIG. 6, the electrical connection member 212 includes a first electrical connection member 212a connected to any one of the R-phase, S-phase, and T-phase busbars 111, 112, and 113, for example, the R-phase busbar 111, and a second electrical connection member 212b connected to the N-phase busbar 114, wherein the plurality of electrical connection members 212 is electrically connected only to one of the R-phase, S-phase, and T-phase busbars 111, 112, and 113 and to the N-phase busbar 114, thereby branching power in a single-phase manner, not a multi-phase manner such as three-phase, and supplying the same to the electric vehicle charger 600.

Alternatively, in the bus duct system for charging electric vehicles according to the present invention, as shown in FIG. 7, a connection terminal 150, such as a tab bar, extending from each of the N-phase busbar 114 and any one of the R-phase, S-phase, and T-phase busbars 111, 112, and 113 may be connected to the electrical connection member 212. In this case, the busbar from which the connection terminal 150 does not extend is not connected to the electrical connection member 212, thereby branching the power in a single-phase manner and supplying the same to the electric vehicle charger 600.

Therefore, in the bus duct system for charging electric vehicles according to the present invention, only one of the R-phase, S-phase, and T-phase busbars 111, 112, and 113 is electrically connected to the first electrical connection member 212a, and the N-phase busbar 114 is electrically connected to the second electrical connection member 212b, whereby the plurality of electrical connection members 210 is electrically connected only to any one of the R-phase, S-phase, and T-phase busbars 111, 112, and 113 and to the N-phase busbar 114.

For example, in a first branching device 200a shown in FIG. 9, the first electrical connection member 212a may be connected to only one of the R-phase busbar, S-phase, and T-phase busbars 111, 112, and 113, for example, the R-phase busbar 111, and the second electrical connection member 212b may be connected to the N-phase busbar 114, whereby the branched power may be supplied to a first electric vehicle charger 600a, as shown in FIG. 8(a). In a second branching device 200b, the first electrical connection member 212a may be connected to only one of the R-phase busbar, S-phase, and T-phase busbars 111, 112, and 113, for example, the S-phase busbar 112, and the second electrical connection member 212b may be connected to the N-phase busbar 114, whereby the branched power may be supplied to a second electric vehicle charger 600b, as shown in FIG. 8(b). In a third branching device 200c, the first electrical connection member 212a may be connected to only one of the R-phase busbar, S-phase, and T-phase busbars 111, 112, and 113, for example, the T-phase busbar 113, and the second electrical connection member 212b may be connected to the N-phase busbar 114, whereby the branched power may be supplied to a third electric vehicle charger 600c, as shown in FIG. 8(c).

Therefore, since power is branched and supplied to each electric vehicle charger 600 in a single-phase manner through the branching device 200, a distribution panel or the like for redistributing power branched into a plurality of phases such as three-phase is unnecessary, whereby the space required to construct the charging facilities is minimized and at the same time the power supply route is simplified, and therefore the likelihood of power supply errors is reduced.

Particularly, the bus duct system for charging electric vehicles according to the present invention, N branching devices 200 may be provided along the entire bus duct line, and when, among the N branching devices, the number of branching devices including the first electrical connection member 212a connected to the R-phase busbar 111 is X, the number of branching devices including the first electrical connection member 212a connected to the S-phase busbar 112 is Y, and the number of branching devices including the first electrical connection member 212a connected to the T-phase busbar 113 is Z, phase balance across the entire bus duct line may be achieved by satisfying Equation 1 below, enabling efficient power supply.

[Equation 1]

$$3(C_{max}-C_{min})/N \leq 0.25$$

In Equation 1, $C_{max}$ is the largest value among X, Y, and Z, and $C_{min}$ is the smallest value among X, Y, and Z.

Here, if the bus duct system for charging electric vehicles according to the present invention does not satisfy Equation 1 above, excessive current may flow through the N-phase busbar, which is a neutral line, causing circuit failure. Furthermore, current is unevenly distributed to one phase busbar, leading to severe voltage drop, heat generation, circuit breaker tripping, and other issues causing inefficient power supply.

Meanwhile, the R-phase busbar 111 may be referred to as an L1-phase busbar, the S-phase busbar 112 as an L2-phase busbar, and the T-phase busbar 113 may be referred to as an L3-phase busbar.

FIG. 10 schematically shows the configuration of the electric vehicle charging system to which a cable reel structure according to the present invention is added.

As shown in FIG. 10, in the electric vehicle charging system according to the present invention, the electric vehicle charger 600 may include a charging unit configured to provide charging power to an electric vehicle, an electric vehicle connection unit configured to connect the charging unit and the electric vehicle to each other via a wired or wireless connection, the electric vehicle connection unit being constituted by a charging cable or wireless charging coil, and a controller configured to control the charging unit. Specifically, the charging unit may receive power from the branching device 200 and may charge the electric vehicle through the electric vehicle connection unit according to a signal received from the controller.

In addition, the electric vehicle charger 600 may be fastened to the bus duct line 100 separately from the branching device 200, or some components of the electric vehicle charger, for example, the charging unit, may be integrally provided in the housing of the branching device 200.

Here, if the electric vehicle connection unit is constituted by a wireless charging coil, the wireless charging coil may be a transmission coil, and the electric vehicle may be provided with a reception coil. For example, the transmission coil may be disposed in the ground at the place at which the electric vehicle is parked, and the reception coil may be disposed at an underside of the electric vehicle. When the electric vehicle is parked, therefore, the transmission coil and the reception coil face each other and current flows into the reception coil by electromagnetic induction to charge a battery in the electric vehicle.

Meanwhile, if the electric vehicle connection unit is constituted by a wired charging cable, cable reel structures 300 or 400 capable of retracting and extending the cable by winding or unwinding the cable to adjust the length of the cable may be further fastened to the bus duct line 100. Here, the cable reel structures may include a single reel structure 300 with one pulley for winding the cable and a double reel structure 400 with two pulleys for winding the cable.

Specifically, the electric vehicle connection unit constituted by the wired charging cable may include a first cable 510a retracted into the single reel structure 300 from the electric vehicle charger and a second cable 510b extended from the single reel structure 300 so as to be connected to the electric vehicle. In addition, the electric vehicle connection unit constituted by the wired charging cable may include a cable 520 retracted into the double reel structure 400 from the electric vehicle charger and extended from the double reel structure.

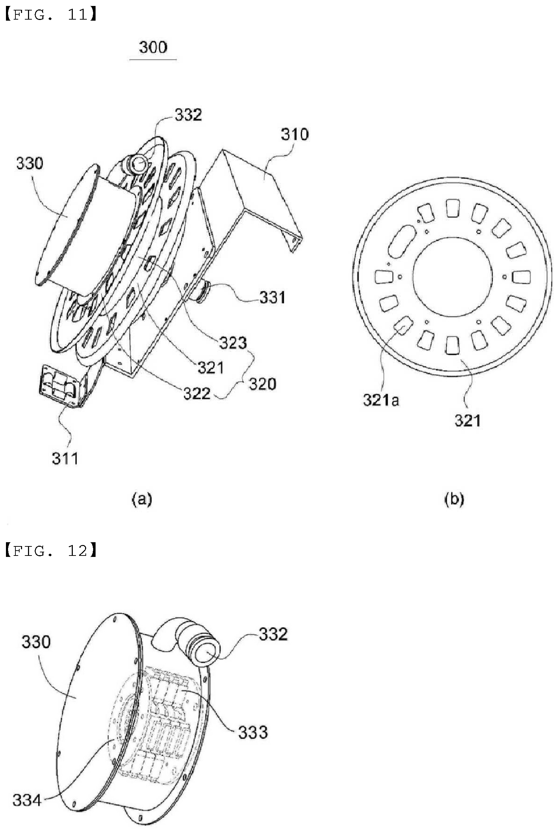

FIG. 11 is an enlarged view showing the configuration of the single reel structure in the cable reel structure shown in FIG. 10. Specifically, FIG. 11(a) is a perspective view of the single reel structure, and FIG. 11(b) is an enlarged view showing only a flange of the single reel structure shown in FIG. 11(a). In addition, FIG. 12 is an enlarged internal perspective view showing only a slip ring in the single reel structure shown in FIG. 11(a).

As shown in FIG. 11, the single reel structure may include a "["-shaped base plate 310 fastened to the bus duct line 100, a pulley 320 rotatable about a shaft extending through the base plate 310 and configured to allow a cable to be wound thereon, and a slip ring 330 coupled to the pulley 320.

Specifically, as shown in FIGs. 11 and 12, the first cable 510a is electrically connected to a brush 333 in the slip ring 330 via a first connection portion 331 at one end of the shaft, the brush 333 is electrically connected to a coil wound on a rotor 334 in the slip ring 330, and the coil is electrically connected to the second cable 510b wound on the pulley 320 via a second connection portion 332, whereby the first cable 510a and the second cable 510b are electrically connected to each other.

Consequently, when the second cable 510b wound on the pulley 320 is extended in order to connect the second cable 510b to the electric vehicle, twist and tension applied to the second cable 510b are offset by the tilting of the rotation axis about which the rotor 334 rotates within a certain angular range, whereby the twist and the tension are not transmitted to the first cable 510a, and therefore it is possible to prevent damage to the first cable 510a and the second cable 510b.

In addition, the second cable 510b is supported by a support member 311 provided at one end of the base plate 310, whereby the second cable may be stably extended from and retracted into the pulley 320.

Furthermore, the pulley 320 may have a structure in which a pair of flanges 321 and 322 is provided at both side surfaces of a centrally disposed cylinder 323, whereby the second cable 510b may be wound on the circumference of the cylinder 323 while being supported by the pair of flanges 321 and 322.

Moreover, the temperature of the second cable 510b rises during charging of the electric vehicle, and in order to increase the power transmission capacity of the second cable 510b through effective heat dissipation, one or more ventilation holes 321a may be provided in each of the flanges 321 and 322, as shown in FIG. 11(b). In addition, the cylinder 323 and the flanges 321 and 322 may be made of a metal with high thermal conductivity, such as copper, aluminum, or an alloy thereof.

Specifically, heat of the lowermost layer of the second cable 510b wound on the circumference of the cylinder 323 that is in direct contact with the cylinder 323 may be dissipated to the cylinder 323 with high thermal conductivity through conduction, whereas heat of the second and subsequent layers that are located above the lowermost layer and are not in direct contact with the cylinder 323, may not be sufficiently dissipated. This may limit the power transmission capacity of the second cable 510b and may cause damage to the second cable 510b, user burns, or a fire.

Therefore, heat of the second and subsequent layers of the second cable 510b may be further dissipated through contact with the outside air through the one or more ventilation holes 321a provided in each of the flanges 321 and 322. Preferably, the ventilation holes 321a may be disposed adjacent to the second and subsequent layers of the second cable 510b, more preferably the third and subsequent layers of the second cable, and the total sectional area of the one or more ventilation holes 321a may occupy 30 to 70% of the sectional area of each of the flanges 321 and 322.

Here, if the total sectional area of the ventilation holes 321a is less than 30% of the sectional area of each of the flanges 321 and 322, contact between the second cable 510b and the outside air and the resulting heat dissipation may be insufficient, reducing the power transmission capacity of the second cable 510b, damaging the cable, causing user burns, or resulting in a fire. Conversely, if the total sectional area of the ventilation holes is greater than 70% of the sectional area of each of the flanges, each of the flanges 321 and 322 may lack sufficient rigidity to stably support the second cable 510b.

In addition, a spring member (not shown) may be provided in the pulley 320 rotatable about the shaft extending through the base plate 310. During the process of extending the second cable 510b wound on the pulley 320 in order to connect the second cable 510b to the electric vehicle, the pulley 320 may rotate in one direction, whereby elastic energy may be stored in the spring member. When the second cable 510b is disconnected from the electric vehicle upon completion of electric vehicle charging, the pulley 320 may automatically rotate in the opposite direction due to the elastic energy stored in the spring member, whereby the second cable 510b may be rewound on the pulley 320.

However, if the winding speed is too fast when the second cable 510b is rewound on the pulley 320 due to the elasticity of the spring member, the second cable 510b may be damaged or may not be stably wound on the pulley 320, and therefore it is necessary to control the winding speed.

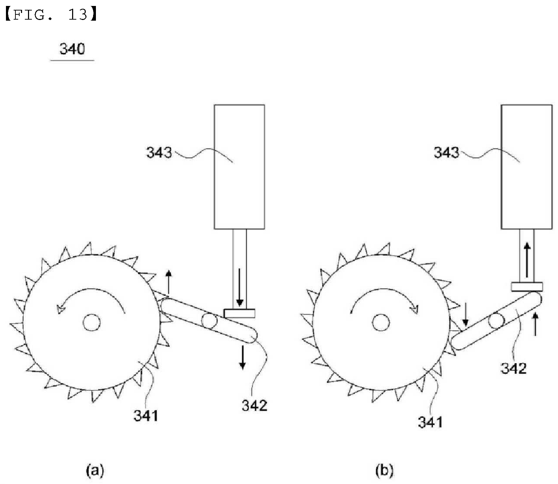

FIG. 13 schematically shows a speed controller applicable to the single reel structure shown in FIG. 11.

As shown in FIG. 13, the single reel structure 300 may be further provided with a speed controller 340 to control the rotational speed of the pulley 320 in the opposite direction, i.e., the rotational speed of the pulley 320 when winding the second cable 510b on the pulley 320.

Specifically, the speed controller 340 is a gear 341 rotatable about the same central axis as the pulley 320 together with the pulley 320, the gear being provided with teeth provided around the circumference thereof so as to protrude therefrom, a support rod 342 disposed adjacent to the gear 341 and rotatable about the central axis such that one end of the support rod moves along the surfaces of the teeth provided around the circumference of the gear when the gear rotates, and a linear damper 343 configured to suppress upward movement of an end of the guide rod 342 farthest from the gear 341.

Here, the gear 341 may be provided separately on each of the base plate 310 and the pulley 320, or one of the pair of flanges 321 and 322 of the pulley 320 may be configured as a gear.

Therefore, as shown in FIG. 13(a), when the gear 341 rotates in a direction in which the pulley 320 rotates when the second cable 510b is extended, i.e., counterclockwise, one end of the guide rod 342 moves along the surfaces of the teeth provided around the circumference of the gear 341 while the other end of the guide rod 342 moves downward without significant resistance.

Conversely, as shown in FIG. 13(b), when the gear 341 rotates in a direction in which the pulley 320 rotates when the second cable 510b is retracted, i.e., clockwise, one end of the guide rod 342 moves along the surfaces of the teeth provided around the circumference of the gear 341 while the other end of the guide rod 342 moves upward, and the linear damper 343 suppresses the upward movement of the other end of the support rod 342 to reduce the rotational speed of the gear 341 and the rotational speed of the pulley 320 rotating with the gear 341, thereby reducing the speed at which the second cable 510b is wound on the pulley 320.

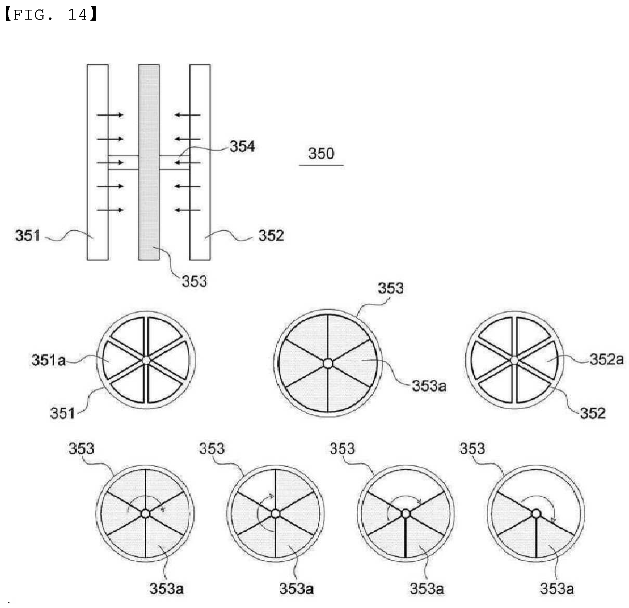

FIG. 14 schematically shows a magnetic damper applicable to the single reel structure shown in FIG. 11.

As shown in FIG. 14, the single reel structure 300 may be provided with a magnetic damper 350, instead of the speed controller 340, as the speed controller. The magnetic damper 350 may include a magnetic stator 351 that is not rotatable and has at least one permanent magnet 351a provided on the surface thereof, a magnetic rotor 352 that is not rotatable and has at least one permanent magnet 352a provided on the surface thereof, a partition 353 that is provided between the magnetic stator 351 and the magnetic rotor 352 and has a plurality of openable shutters 353a, and a rotary shaft 354 configured to connect the magnetic stator 351, the magnetic rotor 352, and the partition 353 to each other.

Specifically, the permanent magnet 351a provided on the magnetic stator 351 and the permanent magnet 352a provided on the magnetic rotor 352 may face each other and may have the same polarity or opposite polarities. The magnetic stator 351 may be fixed to the base plate 310, and the magnetic rotor 352 and the partition 353 may rotate together with the pulley 320.

Therefore, when the second cable 510b is extended, if the partition 353 rotates in the direction of rotation of the pulley 320, the plurality of shutters 353a provided on the partition 353 may all be in a closed state, blocking the path between the permanent magnet 351a of the magnetic stator 351 and the permanent magnet 352a of the magnetic rotor 352, whereby the magnetic rotor 352 and the partition 353 may rotate without significant resistance due to no attractive or repulsive forces between the permanent magnets, and therefore the pulley 320 may also rotate without significant resistance, allowing the second cable 510b to be easily extended.

Conversely, when the second cable 510b is retracted, if the partition 353 rotates in the direction of rotation of the pulley 320, the plurality of shutters 353a is sequentially opened as the degree of rotation or the number of rotations increases, whereby the attractive or repulsive forces acts between the permanent magnets 351a and 352a through empty spaces blocked by the shutters 353a, and therefore the rotation of each of the magnetic rotor 352 and the partition 353 is resisted and thus the rotational speed of each of the magnetic rotor and the partition is reduced. Accordingly, the rotation of the pulley 320 is resisted and thus the rotational speed of the pulley is reduced, and therefore the winding speed of the second cable 510b is reduced.

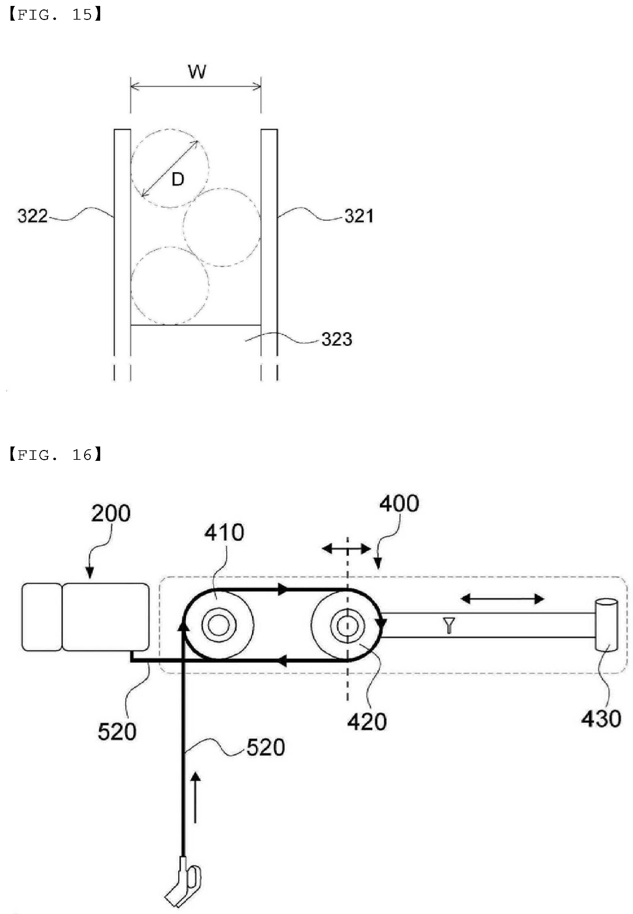

FIG. 15 schematically shows the layered structure of the cable wound on the pulley of the single reel structure shown in FIG. 11.

As shown in FIG. 15, the distance between the pair of flanges 321 and 322 constituting the pulley 320, i.e., the width w of the cylinder 323 provided between the pair of flanges 321 and 322, may be 1.5 to 2.5 times the diameter D of the second cable 510b wound on the pulley 320.

Here, if the width w is less than 1.5 times the diameter D, the diameter of each of the flanges 321 and 322 must be increased in order to stably support the second cable 510b wound thereon, whereby the weight of the single reel structure 300 may increase, and therefore excessive load may be applied to the bus duct line 100 to which the single reel structure 300 is fastened.

Conversely, if the width w exceeds 2.5 times the diameter D, the horizontally arranged part may increase per layer in the layered structure of the second cable 510b, whereby heat dissipation may be insufficiently performed. This may reduce the power transmission capacity of the second cable 510b, and may cause damage to the cable, user burns, or a fire.

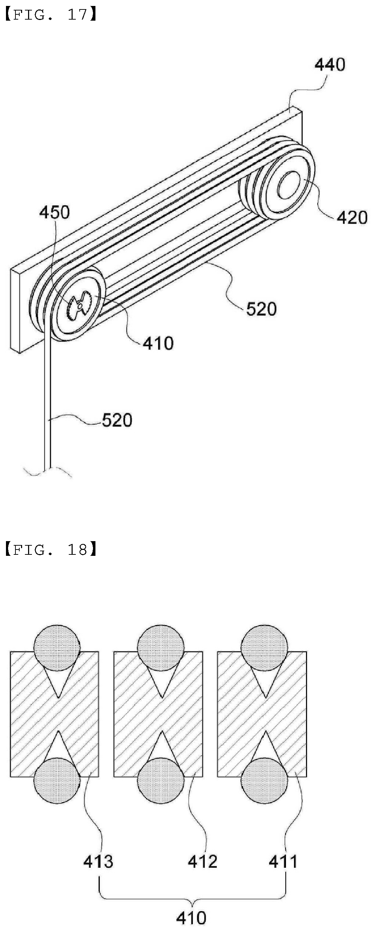

FIG. 16 schematically shows the configuration of the double reel structure in the cable reel structure shown in FIG. 10, and FIG. 17 is an enlarged view showing the double reel structure shown in FIG. 16.

As shown in FIGs. 16 and 17, the double reel structure 400 includes a pair of pulleys 410 and 420 configured to allow the cable 520 to be wound thereon, the pair of pulleys being disposed at a frame 440 in a line, wherein the first pulley 410 disposed adjacent to the electric vehicle charger, which is one of the pair of pulleys 410 and 420, has a stationary central axis about which the first pulley 410 is rotated, and the central axis of the second pulley 420 about which the second pulley is rotated is movable along the frame 440 in a horizontal direction.

In addition, the second pulley 420 may include a retrieval unit 430, such as a roll spring, having elasticity to pull the second pulley 420 away from the first pulley 410.

Therefore, when a user pulls the cable 520 from the first pulley 410 so as to be extended in order to connect the cable 520 to the electric vehicle, the first pulley 410 and the second pulley 420 rotate, and at the same time the second pulley 420 moves horizontally in a direction closer to the first pulley 410, and elasticity is stored in the roll spring connected to the second pulley 420.

Conversely, when the user disconnects the cable 520 from the electric vehicle and removes the pulling force, the elastic energy stored in the roll spring 430 pulls the second pulley 420 away from the first pulley 410. As a result, the first pulley 410 and the second pulley 420 are spaced farther apart from each other, whereby the cable 520 is retrieved. Here, a roll spring is also provided in the second pulley 420. When pulling the second pulley 420 away from the first pulley 410, therefore, the roll spring may rotate the second pulley 420, whereby the retrieval of the cable 520 may be further accelerated.

FIG. 18 schematically shows the section of the pulley on which the cable is wound in the double reel structure shown in FIG. 17.

As shown in FIG. 18, the first pulley 410 may be configured such that a plurality of discs 411, 412, and 413 is connected to each other so as to have the same central axis while being rotatable separately, and the cable 520 may be wound on each of the discs 411, 412, and 413. The same applies to the second pulley 420.

As described earlier, when the cable 520 is retracted into or extended from the double reel structure 400, the second pulley 420 moves horizontally. Since the degrees of rotation, i.e., the rotation angles and the numbers of rotations, of the discs 411, 412, and 413, are different from each other, the discs 411, 412, and 413 must be rotatable separately. If the discs 411, 412, and 413 rotate equally, friction between some discs and the cable 520 wound thereon may damage the cable 520 or make it difficult to retract or extend the cable 520.

Furthermore, in order to minimize friction between each of the discs 411, 412, and 413 and the cable 520 wound thereon, a groove may be formed around the circumference of each of the discs 411, 412, and 413. Specifically, as the cable 520 is wound on the groove, the contact area between the circumference of each of the discs 411, 412, and 413 and the cable may be minimized. This may minimize friction therebetween, preventing damage to the cable 520 due to friction and enabling the cable 520 to be more smoothly retracted or extended.

In addition, the diameter of each of the pulleys 410 and 420 may be designed to be at least 10 times the diameter of the cable 520 wound on each of the pulleys 410 and 420. If the diameter of each of the pulleys 410 and 420 is less than 10 times the diameter of the cable 520 wound thereon, friction between the circumferential surface of each of the pulleys 410 and 420 and the cable 520 may increase, and when the cable 520 is retracted or extended, the cable 520 between the pulleys 410 and 420 may sag downward or rise upward, i.e., cable lift-off phenomenon may occur.

Furthermore, each of the pulleys 410 and 420, for example, at least one of the plurality of discs constituting each of the pulleys 410 and 420 may be made of a material with a low coefficient of friction, such as a polyacetal resin, in order to minimize friction with the cable 520. The polyacetal resin has excellent wear resistance and a low coefficient of friction, further enhancing the rolling characteristics of each of the pulleys 410 and 420.

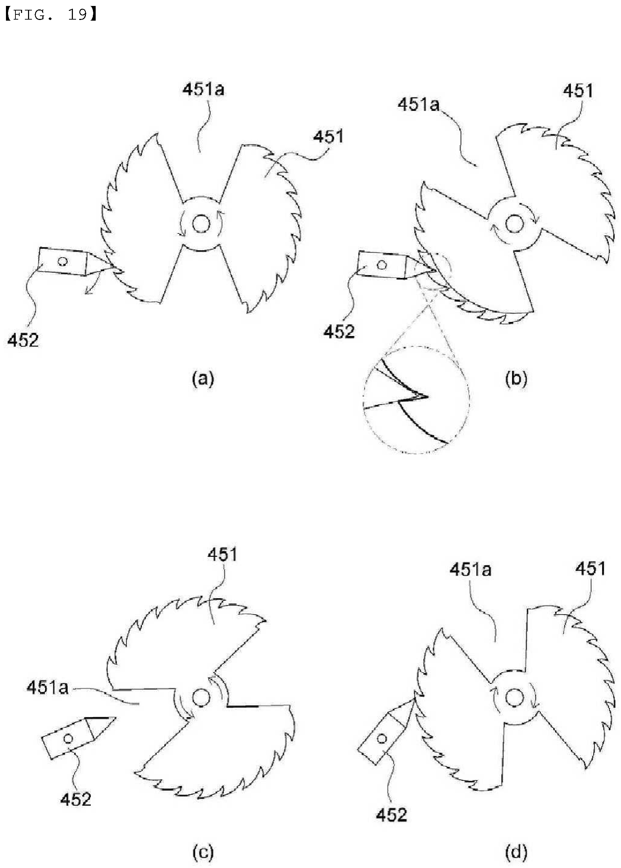

FIG. 19 is an enlarged view showing a ratchet stopper in FIG. 17.

As shown in FIG. 19, the double reel structure 400 may be provided with a stopper configured to fix the cable 520 extended by the user in an extended state, specifically a ratchet stopper 450.

As described above, when the user pulls the cable 520 from each of the pulleys 410 and 420 so as to be extended in order to connect the cable 520 to the electric vehicle, the second pulley 420 moves horizontally toward the first pulley 410, and elastic energy is stored in the retrieval unit 430, such as the roll spring. The elastic energy applies tensile force to the cable 520, causing the cable to be rewound on each of the pulleys 410 and 420 and retrieved.

That is, when charging of the electric vehicle is complete and the user wishes to disconnect the cable 520 from the electric vehicle, disconnecting the cable 520 under continuous tensile force may be difficult. Particularly, if the cable 520 is retrieved at high speed by the tensile force immediately upon disconnection of the cable 520 from the electric vehicle, the cable 520 or the connector provided at the end thereof may be damaged, or the cable 520 or the connector may collide with the user, causing user injury.

Therefore, the ratchet stopper 450 may perform the function of forcibly stopping the rotation of each of the pulleys 410 and 420 on which the cable 520 is wound such that the tensile force of the retrieval unit 430 is not applied to the cable 520 any longer in the state in which the cable is connected to the electric vehicle, thereby preventing retrieval of the cable 520 at high speed immediately upon disconnection of the cable 520 from the electric vehicle.

Specifically, the ratchet stopper 450 may include a ratchet wheel 451 and a latch 452, wherein asymmetrical teeth are formed around the circumference of the ratchet wheel 451, and the latch 452 is engaged over the teeth.

Therefore, as shown in FIG. 19(a), the ratchet wheel 451 may rotate counterclockwise. However, when the ratchet wheel 451 attempts to rotate clockwise, as shown in FIG. 19(b), the teeth are caught by the latch 452, and therefore rotation of the ratchet wheel is impossible. Here, the direction in which rotation of the ratchet wheel is possible and the direction in which rotation of the ratchet wheel is impossible may change depending on the tooth configuration of the ratchet wheel 451. That is, the ratchet wheel 451 may rotate in only one of the clockwise direction and the counterclockwise direction due to the latch 452.

Specifically, the ratchet stopper 450 may be provided on, for example, the first pulley 410 and operate integrally with the first pulley 410. When the user pulls the cable 520 in order to connect the cable to the electric vehicle, each of the pulleys 410 and 420, on which the cable 520 is wound, rotates counterclockwise, whereby the cable 520 is extended. However, since the first pulley 410 cannot rotate clockwise due to the ratchet stopper 450, the extended cable 520 is not automatically retracted.

Meanwhile, the ratchet wheel 451 may be provided with at least one recessed portion 451a, and preferably a pair of recessed portions 451a disposed symmetrically. No teeth are formed in the recessed portion 451a. Therefore, the latch 452 is not caught by the recessed portion 451a. Once the latch 452 is located in the recessed portion 415, as shown in FIG. 19(c), the ratchet wheel 451 may be rotated clockwise, as shown in FIG. 19(d).

That is, the user may select whether the ratchet wheel 451 can rotate clockwise, i.e., whether the cable 520 is automatically retrieved, using the ratchet stopper 450. Specifically, in order to connect the cable 520 to the electric vehicle, the user pulls the cable 520 so as to be extended. When the cable is extended, each of the pulleys 410 and 420 rotates counterclockwise. As shown in FIG. 19(b), when the latch 452 is caught by the teeth, the cable 520 is fixed in an extended state, and the cable 520 is connected to the electric vehicle to charge the electric vehicle.

In addition, when charging of the electric vehicle is complete, the user extends the cable 520 again. When the cable 520 is released in the state in which the latch 452 is located in the recessed portion 415a, as shown in FIG. 19(c), the tensile force caused by the elasticity of the retrieval unit 430 causes the ratchet wheel 451 to rotate clockwise, as shown in FIG. 19(d), and each of the pulleys 410 and 420, which moves integrally with the ratchet wheel 451, also rotates clockwise, whereby the cable 520 may be reliably retrieved.

Specifically, when the ratchet wheel 451 rotates clockwise, as shown in FIG. 19(d), the latch 452 frictionally engages with the teeth formed around the circumference of the ratchet wheel 451. This friction may reduce the rotational speed of the ratchet wheel 451 and the first pulley 410 moving integrally with the ratchet wheel 451, thereby preventing retrieval of the cable 520 at high speed.

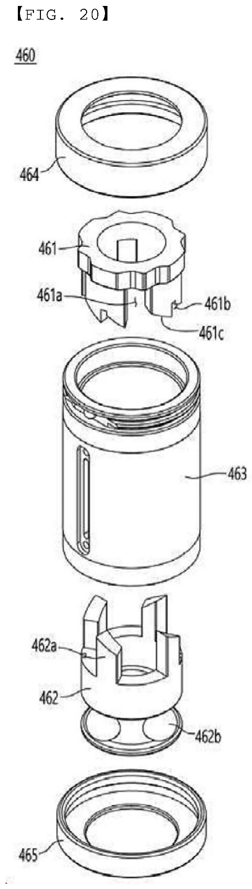

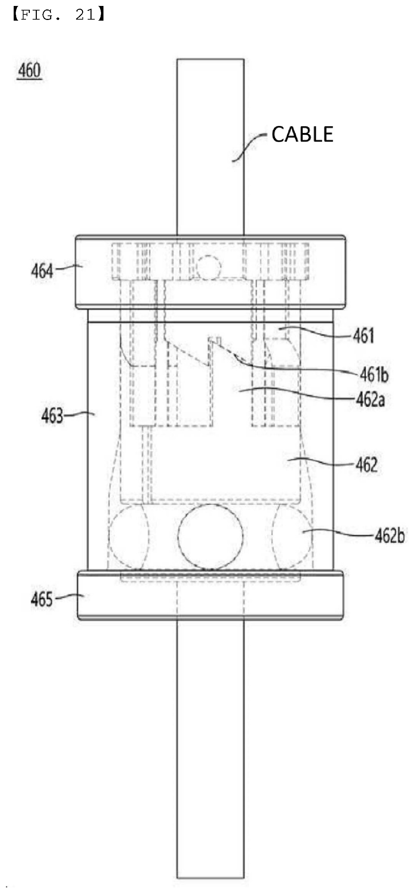

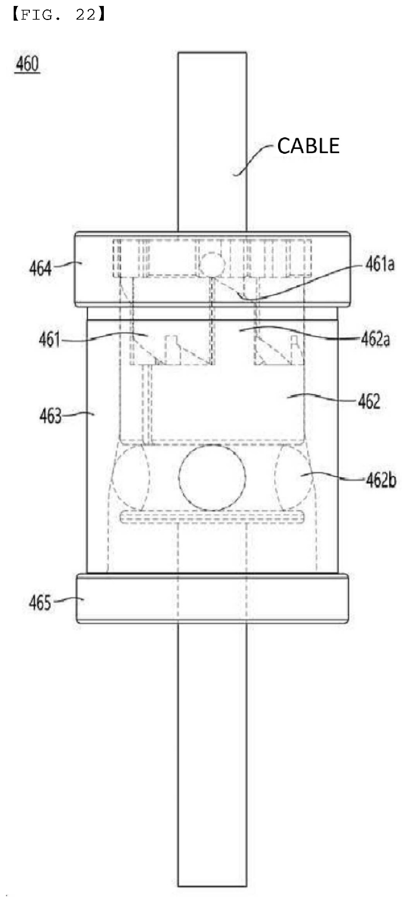

FIG. 20 is an exploded perspective view of a ball bearing stopper applicable to the cable reel structure shown in FIG. 10, FIG. 21 schematically shows an operation of the ball bearing stopper shown in FIG. 20, and FIG. 22 schematically shows another operation of the ball bearing stopper shown in FIG. 20.

The single reel structure of FIG. 11 or the double reel structure of FIG. 16 may be provided with a ball bearing stopper 460 configured to fix the exposed length of the cable wound on the single reel structure or the double reel structure and to control the retracting speed of the cable during retraction of the cable. For example, the ball bearing stopper 460 may be fixed to the base plate 310 of the single reel structure or to the frame 440 of the double reel structure.

As shown in FIG. 20, the ball bearing stopper 460 may be provided with a recessed portion 461 disposed in a cylindrical housing 463 at an upper part thereof, the recessed portion being rotatable in one direction, for example, a counterclockwise direction, and a protrusion 462 disposed in the cylindrical housing at a lower part thereof, the protrusion being movable upward and downward. An upper cover 464 may be fastened to an upper end of the cylindrical housing 463 and a lower cover 465 may be fastened to a lower end of the cylindrical housing, thereby preventing separation of the recessed portion 461 and the protrusion 462 from the cylindrical housing 463.

Here, the recessed portion 461 may be provided therein with a hollow hole through which the cable can pass, long-axis recesses 461a, inclined surfaces 461c, and short-axis recesses 461b may be sequentially disposed at a lower end of the circumference of the hollow hole in repetition. The protrusion 462 may be provided therein with a hollow hole through which the cable can pass, one or more protruding pillars 462a may be provided at an upper end of the circumference of the hollow hole, and one or more balls 462b movable horizontally by a certain length may be provided at a lower end of the circumference of the hollow hole.

Therefore, the cable passes through the hollow hole of the recessed portion 461 disposed in the cylindrical housing 463 at the upper part thereof and the hollow hole of the protrusion 462 disposed in the cylindrical housing 463 at the lower part thereof. When the user pulls the cable downward so as to be extended with a sudden strong force in order to use the cable in this state, the protrusion 462 moves downward together with the cable and the recessed portion 461 rotates counterclockwise. As a result, as shown in FIG. 21, the protruding pillars 462a of the protrusion 462 are inserted into and fixed in the short-axis recesses 461b of the recessed portion 461.

In this state, the one or more balls 462b provided at the lower part of the protrusion 462 surround the circumference of the cable passing through the hollow hole in contact with or adjacent to the surface of the cable. However, since the internal space of the housing is sufficient at the positions of the balls 462b, the balls 462b do not press the circumference of the cable strongly or at all, allowing the cable to move freely upward and downward. Unless the user is holding the cable, tensile force may be applied to the cable in an upward by the elasticity of the single reel retrieval unit of the single reel structure 300 or the double reel retrieval unit 430 of the double reel structure 400, whereby the cable may be retrieved.

Meanwhile, if the user instantaneously pulls the cable downward with somewhat strong force, the protrusion 462 instantaneously moves downward, and the protruding pillars 462a exit the short-axis recesses 461b. At the same time, the recessed portion 461 rotates slightly counterclockwise. As a result, as shown in FIG. 22, the protruding pillars 462a are inserted into the long-axis recesses 461a.

In this state, the balls 462b provided at the lower end of the protrusion 462 is located higher than the position in the state shown in FIG. 21, i.e., the position in the state in which the protruding pillars 462a are inserted into the short-axis recesses 461b. At this position, the internal space of the housing is reduced, whereby the balls 462b press the circumference of the cable relatively strongly, thereby inhibiting upward-downward movement of the cable.

In the initial state of the ball bearing stopper 460, therefore, the protruding pillars 462a of the protrusion 462 are inserted into the long-axis recesses 461a of the recessed portion 461, and the balls 462b provided at the lower end of the protrusion 462 press the circumference of the cable passing through the hollow hole to inhibit upward-downward movement of the cable, as shown in FIG. 22.

In addition, when the user wishes to pull the cable downward so as to be extended in order to use the cable, if the user jerks the cable downward with strong force, the protrusion 462 instantaneously moves downward, and the recessed portion 461 rotates counterclockwise, whereby the protruding pillars 462a exit the long-axis recesses 461a and are inserted into the short-axis recesses 461b, as shown in FIG. 13. In this state, the user may freely pull the cable downward so as to be extended, and may use the cable, such as connecting the cable to the electric vehicle.

Furthermore, when the user pulls the cable downward again with strong force in order to remove the tensile force applied to the cable immediately before or after using the cable, the protrusion 462 instantaneously moves downward, and the recessed portion 461 rotates counterclockwise. As a result, as shown in FIG. 22, the protruding pillars 462a exit the short-axis recesses 461b and are inserted into the long-axis recesses 461a again. In this state, the one or more balls 462b provided at the lower end of the protrusion 462 press the circumference of the cable, thereby suppressing upward-downward movement of the cable.

Finally, when the use of the cable is completed and the user pulls the cable downward with strong force again in order to retrieve the cable, the protrusion 462 instantaneously moves downward, and the recessed portion 461 rotates counterclockwise. As a result, the protruding pillars 462a exit the long-axis recesses 461a and are inserted into the short-axis recesses 461b, as shown in FIG. 21. When the user releases the cable in this state, the single reel retrieval unit of the single reel structure 300 or the double reel retrieval unit 430 of the double reel structure 400 pulls and retrieves the cable using stored elastic energy.

Here, counterclockwise rotation of the recessed portion 461 may be changed to clockwise rotation of the recessed portion depending on the placement of the long-axis recesses 461a and the short-axis recesses 461b of the recessed portion 461, and the rotation of the recessed portion 461 may be performed manually by the user or automatically by a sub-ball bearing further provided in the housing.

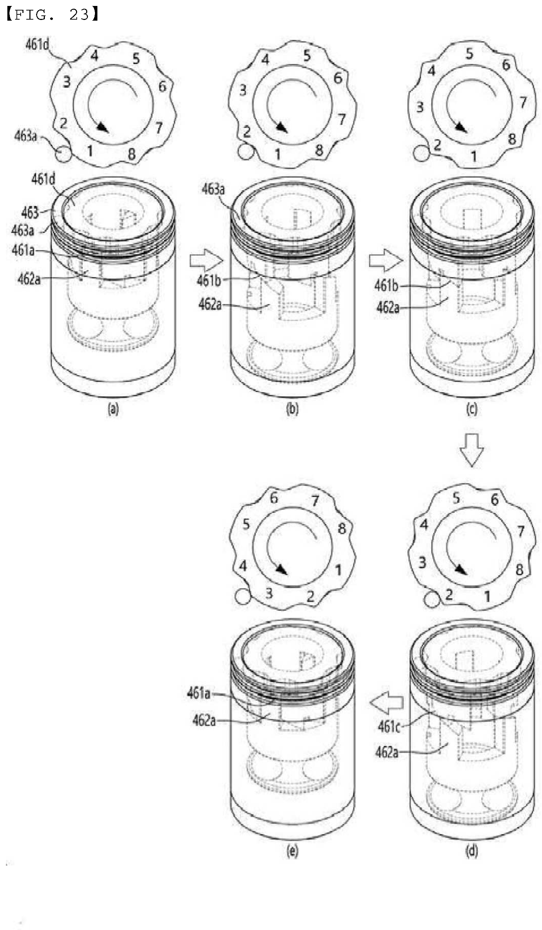

FIG. 23 schematically shows the operation of a sub-ball bearing in the ball bearing stopper shown in FIG. 20.

As shown in FIG. 23, the sub-ball bearing 463a further provided in the housing may perform the function of pressing the recessed portion 461 in the clockwise direction or in the counterclockwise direction in the state in which the protruding pillars 462a of the protrusion 462 are inserted into the long-axis recesses 461a or the short-axis recesses 461b of the recessed portion 461.

Specifically, as shown in FIG. 23(a), in the state in which the protruding pillars 462a of the protrusion 462 are inserted into the long-axis recesses 461a of the recessed portion 461, the sub-ball bearing 463a is disposed on an inclined surface disposed adjacent to a first protruding position between the first protruding position and a second protruding position of a recessed and protruding portion 461d provided at the recessed portion 461, the recessed and protruding portion including a plurality of protruding portions and an inclined surface provided between adjacent ones of the protruding portions, and the sub-ball bearing presses the inclined surface to apply force for rotating the recessed and protruding portion 461d in the counterclockwise direction.

Next, as shown in FIG. 23(b), when the protrusion 462 moves downward and is separated from the recessed portion 461, the recessed portion 461 rotates slightly counterclockwise due to the pressing force of the sub-ball bearing 463a, whereby the protruding pillars 462a of the protrusion 462 exit the long-axis recesses 461a and enter the short-axis recesses 461b adjacent to the long-axis recesses 461a. Here, the sub-ball bearing 463a is located at the most recessed part between the first position and the second position of the recessed and protruding portion 461d.

As shown in FIG. 23(c), the protruding pillars 462a that have entered the short-axis recesses 461b are inserted into the short-axis recesses 461b as inclined surfaces formed on upper parts of the protruding pillars slide along inclined surfaces formed in the short-axis recesses 461b. In this process, the sub-ball bearing 463a is located on the inclined surface adjacent to the second protruding position between the second protruding position and a third protruding position of the recessed and protruding portion 461d, and the sub-ball bearing presses the inclined surface to apply force for rotating the recessed and protruding portion 461d in the counterclockwise direction.

Next, as shown in FIG. 23(d), when the protrusion 462 moves downward and is separated from the recessed portion 461, the recessed portion 461 rotates slightly counterclockwise due to the pressing force of the sub-ball bearing 463a, whereby the protruding pillars 462a of the protrusion 462 exit the short-axis recesses 461b and enter the inclined surfaces 461c adjacent to the short-axis recesses 461b. Here, the sub-ball bearing 463a is located at the most recessed part between the second position and the third position of the recessed and protruding portion 461d.

Finally, as shown in FIG. 23(e), the protruding pillars 462a that have entered the inclined surfaces 461c are inserted into the long-axis recesses 461a again as the inclined surfaces formed on the upper parts of the protruding pillars slide along the inclined surfaces 461c. In this process, the sub-ball bearing 463a is located on the inclined surface adjacent to the third protruding position between the third protruding position and a fourth protruding position of the recessed and protruding portion 461d, and the sub-ball bearing presses the inclined surface to apply force for rotating the recessed and protruding portion 461d in the counterclockwise direction.

That is, in this process, as the protrusion 462 repeatedly moves upward and downward, the recessed portion 461 may continuously rotate slightly counterclockwise or clockwise to adjust the position of the protrusion 462. At the same time, the ball bearing 462b of the protrusion 462 may repeatedly fix or release the cable passing through the hollow hole in the protrusion.

[Examples]

1. Phase Equilibrium Evaluation

Phase equilibrium was evaluated under the conditions listed in Table 1 below, with a total load of 281.6 kW and a load of 6.4 kW, on a bus duct line in which a total of 44 branch boxes is connected to each bus duct. The evaluation results are as shown in Table 2 below.

[Table 1]

|  | Example 1 | | Example 2 | | Example 3 | |
|---|---|---|---|---|---|---|
|  | Number of loads | Capacity (kW) | Number of loads | Capacity (kW) | Number of loads | Capacity (kW) |
| A(R-N) | 14 | 89.6 | 15 | 96 | 17 | 108.8 |
| B(S-N) | 15 | 96 | 13 | 83.2 | 16 | 102.4 |
| C(T-N) | 15 | 96 | 16 | 102.4 | 11 | 70.4 |

[Table 2]

|  | Example 1 | Example 2 | Example 3 |
|---|---|---|---|
| 3(Cmax - Cmin)/N | 0.0076 | 0.2046 | 0.4091 |
| A-B Load capacity difference | 6.4 | 12.8 | 6.4 |
| B-C Load capacity difference | 0 | 19.2 | 32 |
| C-A Load capacity | 6.4 | 6.4 | 38.4 |
| difference | | | |
| D (Maximum value of load capacity difference) | 6.4 | 19.2 | 38.4 |
| E (Total load/3) | 93.9 | 93.9 | 93.9 |
| Load imbalance ratio (D/E*100) (%) | 6.8 | 20.5 | 40 |

As shown in Table 2 above, the bus duct lines of Examples 1 and 2, which satisfy Equation 1, may perform efficient power supply with a load imbalance ratio between the R-phase, S-phase, and T-phase busbars of 30% or less. However, the bus duct line of Example 3, which does not satisfy Equation 1, has a load imbalance ratio exceeding 30%. This may cause circuit failure due to excessive current in the neutral line, severe voltage drop due to current concentration on one phase, and inefficient power supply involving heating and circuit breaker operation. Here, the load imbalance ratio (unit: %) may be calculated as (D/E*100) according to the equation in Table 2.

Although an embodiment of the present invention has been described in this specification, those skilled in the art will appreciate that various changes and modifications are possible without departing from the idea and scope of the present invention recited in the appended claims. Therefore, it should be understood that such changes and modifications fall within the technical category of the present invention as long as the changes and modifications include elements described in the claims of the present invention.

**Claims**

1. A bus duct system for charging electric vehicles, the bus duct system comprising:

   a bus duct line comprising a plurality of bus ducts and a bus duct connection unit configured to electrically connect the bus ducts to each other, the bus duct line constituting a power supply network; and
   a branching device configured to branch power supplied through the bus ducts to supply the branched power to an electric vehicle charger, wherein
   each of the bus ducts comprises a plurality of busbars and an enclosure configured to receive the plurality of busbars,
   the plurality of busbars comprises an R-phase busbar, an S-phase busbar, a T-phase busbar, and at least one N-phase busbar,
   the branching device comprises a first electrical connection member connected to any one of the R-phase, S-phase, and T-phase busbars and a second electrical connection member connected to the N-phase busbar as a plurality of electrical connection members electrically connected one-to-one to the plurality of busbars, and
   the plurality of electrical connection members is electrically connected only to any one of the R-phase, S-phase, and T-phase busbars and to the N-phase busbar.

2. The bus duct system according to claim 1, wherein

   the branching device is provided in a quantity of N along the entire bus duct line,
   among the N branching devices, the number of branching devices comprising the first electrical connection member connected to the R-phase busbar is X, the number of branching devices comprising the first electrical connection member connected to the S-phase busbar is Y, and the number of branching devices comprising the first electrical connection member connected to the T-phase busbar is Z, and
   Equation 1 below is satisfied.

   [Equation 1]

   $$3(C_{max}-C_{min})/N \leq 0.25$$

   In Equation 1, $C_{max}$ is a largest value among X, Y, and Z, and $C_{min}$ is a smallest value among X, Y, and Z.

3. The bus duct system according to claim 1 or 2, wherein each of the plurality of electrical connection members is electrically connected to a corresponding one of the plurality of busbars via a connection terminal coupled to each of the plurality of busbars.

4. An electric vehicle charging system comprising:

   the bus duct system according to claim 1 or 2; and
   an electric vehicle charger configured to charge an electric vehicle using power supplied from the branching device.

5. The electric vehicle charging system according to claim 4, wherein the electric vehicle charger comprises:

   a charging unit configured to provide charging power to an electric vehicle;
   an electric vehicle connection unit configured to connect the charging unit and the electric vehicle to each other via a wired or wireless connection; and
   a controller configured to control the charging unit.

6. The electric vehicle charging system according to claim 5, wherein the charging unit is provided in the branching device.

7. The electric vehicle charging system according to claim 5, wherein the electric vehicle connection unit comprises a charging cable or a wireless charging coil.

8. The electric vehicle charging system according to claim 7, wherein

the electric vehicle connection unit comprises a charging cable, and
the electric vehicle charging system further comprises a cable reel structure capable of extending or retracting the charging cable to adjust a length of the charging cable.

9. The electric vehicle charging system according to claim 8, wherein the cable reel structure comprises a single reel structure with one pulley for winding the charging cable or a double reel structure with two pulleys for winding the charging cable.

【FIG. 1】

【FIG. 2】

【FIG. 3】

【FIG. 4】

(a)                    (b)

【FIG. 5】

【FIG. 6】

【FIG. 7】

【FIG. 8】

(a)

(b)

(c)

【FIG. 9】

【FIG. 10】

【FIG. 11】

(a)

(b)

【FIG. 12】

【FIG. 13】

340

(a)

(b)

【FIG. 14】

【FIG. 15】

【FIG. 16】

【FIG. 17】

【FIG. 18】

【FIG. 19】

451a
451
452
(a)

451a
451
452
(b)

451
451a
452
(c)

451a
451
452
(d)

【FIG. 20】

460

461

461a

461b

461c

463

462a

462

462b

465

【FIG. 21】

【FIG. 22】

【FIG. 23】

## INTERNATIONAL SEARCH REPORT

| | International application No. |
|---|---|
| | **PCT/KR2024/013445** |

| A. | CLASSIFICATION OF SUBJECT MATTER |
|---|---|

**B60L 53/30**(2019.01)i; **B60L 53/18**(2019.01)i; **B60L 53/12**(2019.01)i; **H02G 11/02**(2006.01)i; **H02G 11/00**(2006.01)i

According to International Patent Classification (IPC) or to both national classification and IPC

| B. | FIELDS SEARCHED |
|---|---|

Minimum documentation searched (classification system followed by classification symbols)

B60L 53/30(2019.01); B60L 11/18(2006.01); B60L 53/14(2019.01); C08L 27/06(2006.01); H01M 10/46(2006.01); H01R 25/16(2006.01); H02G 5/06(2006.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부스덕트(bus duct), 분기(branch), 연결(connection), 충전기(charger), 전기차 (electric vehicle)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0013626 A (LS CABLE & SYSTEM LTD.) 26 January 2023 (2023-01-26)<br>See paragraphs [0043]-[0060] and [0111]; and figures 1-5. | 1-9 |
| A | KR 10-2013-0067413 A (HYOSUNG CORPORATION) 24 June 2013 (2013-06-24)<br>See paragraphs [0020] and [0028]-[0037]; and figures 2-4. | 1-9 |
| A | KR 10-1742515 B1 (JOONG ANG CONTROL CO., LTD.) 15 June 2017 (2017-06-15)<br>See paragraphs [0021]-[0026]; and figure 2. | 1-9 |
| A | EP 3184352 B1 (ZAPTEC IP AS) 19 April 2023 (2023-04-19)<br>See paragraphs [0016]-[0027]; and figures 1-4. | 1-9 |
| A | KR 10-2476593 B1 (KIM, San-Hong) 12 December 2022 (2022-12-12)<br>See paragraphs [0024]-[0033]; and figures 1-3. | 1-9 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2024** | **06 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 778 773 A1

## INTERNATIONAL SEARCH REPORT
### Information on patent family members

International application No.

**PCT/KR2024/013445**

| Patent document cited in search report | | | Publication date (day/month/year) | Patent family member(s) | | | Publication date (day/month/year) |
|---|---|---|---|---|---|---|---|
| KR | 10-2023-0013626 | A | 26 January 2023 | US | 2024-0322547 | A1 | 26 September 2024 |
| | | | | WO | 2023-003270 | A1 | 26 January 2023 |
| KR | 10-2013-0067413 | A | 24 June 2013 | | None | | |
| KR | 10-1742515 | B1 | 15 June 2017 | | None | | |
| EP | 3184352 | B1 | 19 April 2023 | CN | 108541242 | A | 14 September 2018 |
| | | | | CN | 108541242 | B | 15 April 2022 |
| | | | | DK | 3184352 | T3 | 31 July 2023 |
| | | | | EP | 3184352 | A1 | 28 June 2017 |
| | | | | EP | 4112365 | A1 | 04 January 2023 |
| | | | | ES | 2949955 | T3 | 04 October 2023 |
| | | | | FI | 3184352 | T3 | 19 July 2023 |
| | | | | HR | P20230727 | T1 | 13 October 2023 |
| | | | | JP | 2019-502349 | A | 24 January 2019 |
| | | | | PL | 3184352 | T3 | 11 September 2023 |
| | | | | PT | 3184352 | T | 25 July 2023 |
| | | | | WO | 2017-109094 | A1 | 29 June 2017 |
| KR | 10-2476593 | B1 | 12 December 2022 | | None | | |

Form PCT/ISA/210 (patent family annex) (July 2022)